# EUROPEAN PATENT APPLICATION

(11) **EP 2 078 850 A2**
(43) Date of publication of application: **15.07.2009**
(21) Application number: 08171284.6
(22) Date of filing: 11.12.2008
(51) Int. Cl.: F03D 1/00, F03D 11/00, F03D 11/04

(54) **Gluing of wind turbine internals to structural components**

(30) Priority: 28.12.2007 US 966080
(71) Applicant: General Electric Company, Schenectady, NY 12345 (US)
(72) Inventor: Landau, Thorsten, 49479 Ibbenburen-Laggenbeck (DE)
(74) Representative: Bedford, Grant Richard

(57) **Abstract**

A method of mounting an internal element 190 in a wind turbine 100 is provided, whereby the element is attached to the wind turbine by means of gluing.

## Description

The present invention relates generally to wind turbines. Particularly, the invention relates to a method for attaching wind turbine mechanical and electrical internals to a wind turbine by means of gluing.

In the tower, hub and nacelle of a wind turbine, a variety of internals is mounted. These include, amongst others, cables, ladders, platforms, sockets, clamps and illumination elements. Conventionally, these elements are attached to the tower or nacelle walls by screwing or by welding. Both methods require relatively extensive preparations before mounting the internals, as holes have to be drilled or the tower wall has to be prepared for welding. In both cases, a mistake during the preparation causes costs and additional work load.

In view of the above, according to one embodiment of the present invention, a method of mounting an element in a wind turbine is provided, whereby the element is attached to the wind turbine by means of gluing.

According to another embodiment, a method of mounting an element in a wind turbine is provided, whereby the element is attached to the wind turbine by means of gluing.

Further embodiments, aspects, advantages and features are apparent from the dependent claims, the description and the accompanying drawings, in which:
- Fig. 1: shows a schematic drawing illustrating a typical wind turbine;
- Fig. 2a-2b: shows a schematic view of an element to be mounted inside a wind turbine according to an embodiment of the invention;
- Fig. 3a-3b: show schematic views illustrating method steps for mounting an element according to an embodiment of the invention;
- Fig. 4a-4b: show schematic views illustrating a suspension element according to an embodiment of the invention;
- Fig. 5: shows a schematic view illustrating the mounting of an element by employing a suspension element

Reference will now be made in detail to the various embodiments of the invention, one or more examples of which are illustrated in the figures. Each example is provided by way of explanation of the invention and is not meant as a limitation of the invention. For example, features illustrated or described as part of one embodiment can be used on or in conjunction with other embodiments to yield yet a further embodiment. It is intended that the present invention includes such modifications and variations.

Wind turbines are built in a modular fashion. The tower, nacelle, hub, generator and gearbox are mounted separately and finally assembled before the turbine is delivered to its final destination. The tower is typically assembled from segments and does in its pre-fabricated state not comprise any internal elements necessary for regular operation of the wind turbine, such as illumination elements, switches, wall plugs, clamps, maintenance platforms, ladders, cable channels and cables. Most of these elements are typically mounted to the inner tower wall after assembly of the tower. The inventors have found out that by replacing the standard fastening procedures of welding or screwing by gluing, time and costs needed for the respective processes can be reduced significantly.

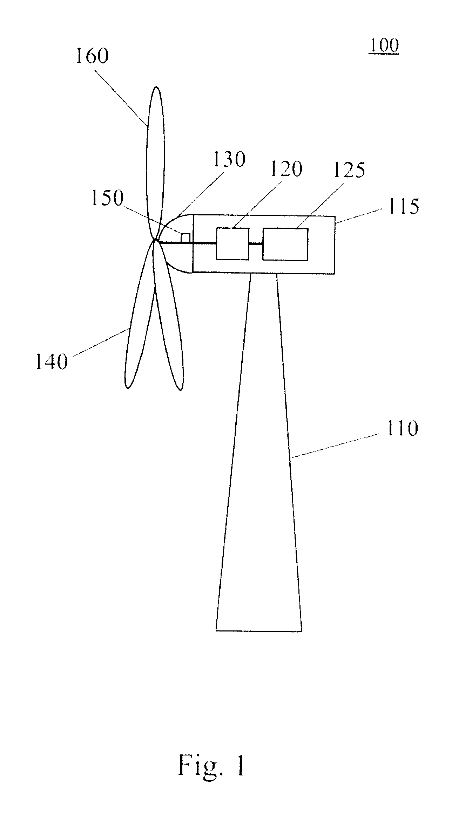

Fig. 1 shows a schematic view of a conventional wind turbine. The wind turbine 100 includes a tower 110 to which a machine nacelle 115 is mounted at its top end. The nacelle houses a drive train to which a gearbox 120 is connected. The output of the gearbox is connected to a main electric generator 125. The rotor 160 comprises a hub 130 bearing three rotor blades 140, and is mounted to a lateral end of the machine nacelle 115. The rotor blades 140 can be adjusted by a pitch drive 150 which is typically accommodated inside hub 130.

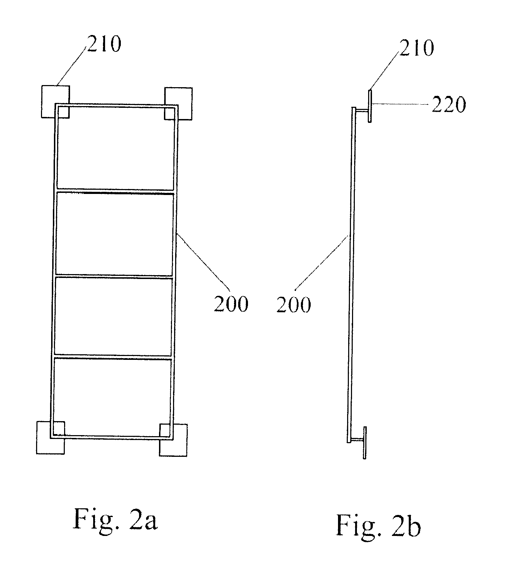

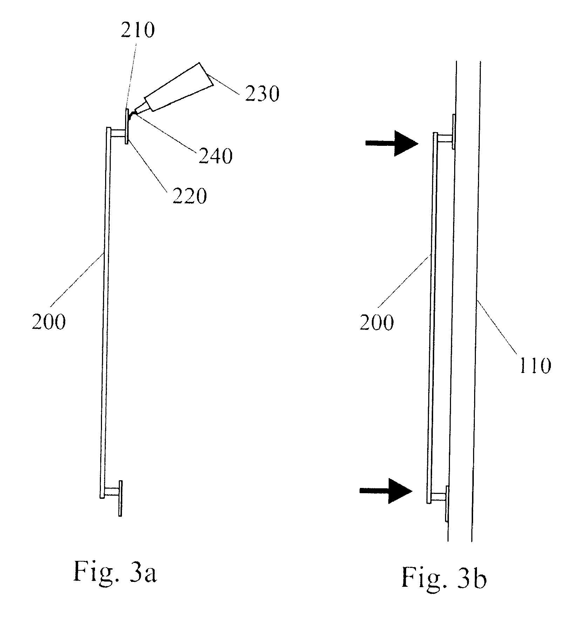

In an embodiment of the invention, an element 190, by way of example a ladder 200, is attached to the inner wall of tower 110 by means of gluing. Figs. 2a and 2b show a ladder 200 comprising four adhesion members 210. The members 210 each include a surface 220. Fig. 3a shows how an adhesive 240 from a reservoir 230 is applied to the surface 220 of member 210. Method steps necessary for a stable and durable adhesion are well known to the skilled person, such as cleaning the surfaces before application of the adhesive or glue. Depending on the adhesive used, it may be required to wait a certain amount of time, e.g. thirty seconds to five minutes (or more), before the element can be brought in contact with the tower wall. Fig. 3b shows how the ladder 200 is attached to the wall of tower 110 by applying a force perpendicular to the tower wall. The force which one man can excert when standing on a movable working platform is typically sufficient.

The adhesive can be a standard adhesive or a two-component adhesive. A non-limiting list of examples comprises vinyl ester resin, epoxy resin, cyan acrylate, methyl methacrylate based adhesives, and silicone based adhesives.

Typically, before an element may be attached to the tower wall, the surface of the wind turbine tower has to be prepared for the adhesive process. This is due to the fact that the metal wall of the tower is often treated by a conservative method such as painting. Depending on the type of surface preparation, the wall may not be suitable for a stable adhesion to the element. Thus, in most cases preparation of the wall is necessary in order to allow a stable adhesion between element and tower wall. This preparation is typically carried out by corroding, eroding, grinding, brushing or scratching in order to clean the surface of paint, residues and the like and to allow for best adhesion between element and wind turbine tower. Suitable methods vary depending on the state of the tower wall and are familiar to a person skilled in the art.

Typically, the element to be mounted comprises at least one contact surface, which will be adhered or glued to the wind turbine. This surface may exhibit the form of a part of a cylinder wall with the same radius of curvature as the tower. It may as well have a flat shape, in which case there will be a gap between the surface and the wall after gluing, as the shape of the surface does not match with the rounded shape of the wall. In this case, the adhesive will have to fill out the respective gap, which requires sufficient gap-filling properties of the adhesive used.

The material of the contact surface can be chosen from a wide range of materials such as metals like steel, casting, aluminum and aluminum alloys, plastic, glass-fiber reinforced plastic or carbon fiber. In most cases, the material of the surface will be the one of the body of the element to be fastened. It must be considered that the adhesive used is compatible with the surface material.

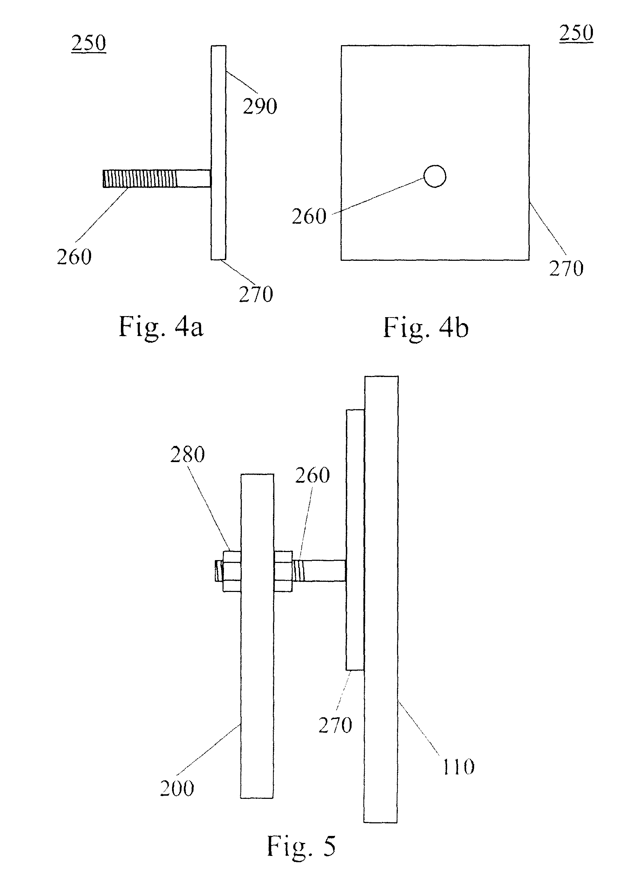

In an embodiment of the invention, the element to be attached to the wind turbine wall is not directly glued to the wall. Instead, a suspension element 250 is adhered to the wall as a kind of intermediate element. The element, as an example ladder 200, is then attached to the suspension element 250 by means of mechanical fixation. An example for a typical suspension element is schematically shown in Fig. 4a and 4b. The suspension element 250 includes a plate 270 including a surface 290 for adhesion to the wind turbine wall, and a fixation element 260 for the fixation of the element to be mounted. In the illustrated example, the fixation element is a threaded rod 260. Fig. 5 shows how a ladder 200 is mounted with two nuts 280 to rod 260. The fixation may be carried out by a variety of mechanical fixation methods such as, non-limiting, screwing, clamping, or engaging a rail and a counterpart. By way of example, the suspension element may comprise a bolt, a bush with an inside threat, a rod, a threaded rod or a rail. The respective counterparts for a mechanical connection are mounted to the element to be fastened. This is of practical use as the element is not itself adhered to the wall, which is desirable in case the element has to be exchanged, e.g. due to failure.

In an embodiment of the invention, the suspension element 250 exhibits a more complex shape. As an example, the suspension element may include several threaded rods 260 on an elongated plate 270. Plate 270 has a length of several meters, preferably 1 to 3 meters, and is mounted with its greatest elongation in horizontal direction along the inner wall of the wind turbine tower. The shape of the plate follows the curvature of the tower. Such an elongated suspension element may take, due to the huge contact area for adhesion, high loads, which are e.g. caused by a platform on which an electrical transformer is located.

Various aspects and embodiments of the present invention are now defined in the following numbered clauses:
1. Method of mounting an internal element in a wind turbine, whereby the element is attached to the wind turbine by means of gluing.
2. The method of clause 1, wherein the element comprises a contact surface.
3. The method of any preceding clause, wherein the contact surface is of a material chosen from the group metal, plastic, carbon fiber, and glass-fiber reinforced plastic.
4. The method of any preceding clause, wherein the contact surface has the shape of a part of a cylinder wall.
5. The method of any preceding clause, wherein the element comprises a suspension element, the suspension element is mechanically attached to the element, and the suspension element is attached to the wind turbine by means of gluing.
6. The method of any preceding clause, wherein the suspension element comprises an element chosen from the group comprising a bush, a rod, and a threaded rod.
7. The method of any preceding clause, wherein the glue comprises at least one of a vinyl ester, an epoxy resin, an ethyl acrylate, a silicon based adhesive and a methyl acrylate.
8. The method of any preceding clause, wherein the element is chosen from the group consisting of a cable, a part of a cable, a cable channel, a clamp, a wall plug, a ladder, a platform, and illumination means.
9. The method of any preceding clause, further comprising
   - preparing a part of a surface of the wind turbine before attaching the element to the surface.
10. The method of any preceding clause, wherein the preparation is carried out by corroding, eroding, grinding, brushing or scratching.
11. A wind turbine, comprising
   an internal element and
   a suspension element,
   wherein the suspension element is attached to the wind turbine by means of gluing, and the internal element is attached to the suspension element by means of mechanical fixation.
12. Wind turbine according to clause 11, wherein the means of mechanical fixation is chosen from the group consisting of screwing, clamping, and engagement.
13. Wind turbine according to clause 11 or 12, wherein the suspension element has substantially the form of a cuboid.
14. The wind turbine of any of clauses 11 to 13, wherein the suspension element comprises a plate.
15. The method of any of clauses 11 to 14, wherein the plate has the shape of a part of a cylinder wall.
16. The method of any of clauses 11 to 15, wherein the suspension element further comprises one element chosen from the group consisting of a bush, an inside threat, a bolt, a rod and a threaded rod.
17. The wind turbine of any of clauses 11 to 16, wherein the suspension element is of a material chosen from the group comprising metal, plastic, carbon fiber, and glass-fiber reinforced plastic.
18. The wind turbine of any of clauses 11 to 17, wherein the element is chosen from the group consisting of a cable, a part of a cable, a clamp, a ladder, a platform, and illumination means.
19. The wind turbine of any of clauses 11 to 18, wherein the glue is chosen from the group consisting of at least one of a Vinylester, an epoxy resin, an ethyl acrylate, silicon based and a methyl acrylat.
20. The wind turbine of any of clauses 11 to 19, wherein the glue is a two-component-resin.
21. The wind turbine of any of clauses 11 to 20, wherein the element is removably connected to the wind turbine.

## Claims

1. A method of mounting an internal element in a wind turbine (100), whereby the element (190) is attached to the wind turbine by means of gluing.

2. The method of claim 1, wherein the element (190) comprises a contact surface (220).

3. The method of claim 2, wherein the contact surface (220) is of a material chosen from the group metal, plastic, carbon fiber, and glass-fiber reinforced plastic.

4. The method of claim 2 or claim 3, wherein the contact surface (220) has the shape of a part of a cylinder wall.

5. The method of any preceding claim, wherein the element (190) comprises a suspension element (250), the suspension element is mechanically attached to the element, and the suspension element is attached to the wind turbine by means of gluing.

6. A wind turbine (100), comprising
an internal element (190) and
a suspension element (250),
wherein the suspension element is attached to the wind turbine by means of gluing, and the element is attached to the suspension element by means of mechanical fixation.

7. The wind turbine (100) according to claim 6, wherein the means of mechanical fixation is chosen from the group consisting of screwing, clamping, and engagement.

8. The wind turbine (100) according to claim 6 or claim 7, wherein the suspension element (250) has substantially the form of a cuboid.

9. The wind turbine (100) according to claim 6 or claim 7, wherein the suspension element (250) has substantially the shape of a part of a cylinder wall.

10. The wind turbine (100) according to any of claims 6 to 9, wherein the suspension element (250) further comprises one element chosen from the group consisting of a bush, an inside threat, a bolt, a rod and a threaded rod.
